# FASCICULE DE BREVET EUROPEEN

(11) **EP 3 156 985 B1**
(45) Date de publication et mention de la délivrance du brevet: **20.06.2018**
(21) Numéro de dépôt: 16306352.2
(22) Date de dépôt: 13.10.2016
(51) Int. Cl.: G08B 25/00, G08B 25/10, G08B 13/196, H04W 72/04, H04W 84/20

(54) **PROCÉDÉ ET SYSTÈME DE COMMUNICATION BIDIRECTIONNELLE RADIOFRÉQUENCE, AVEC MULTIPLEXAGE DE TRANSMISSIONS RAPIDE ET LENTE**
VERFAHREN UND SYSTEM ZUR BIDIREKTIONALEN KOMMUNIKATION ÜBER FUNK MIT MULTIPLEXING DER SCHNELLEN UND LANGSAMEN ÜBERTRAGUNGEN
BIDIRECTIONAL RADIO COMMUNICATION METHOD AND SYSTEM, WITH QUICK AND SLOW TRANSMISSION MULTIPLEXING

(30) Priorité: 16.10.2015 FR 1559887
(43) Date de publication de la demande: 19.04.2017
(73) Titulaire: Radio Systèmes Ingénierie Vidéo Technologies Société par actions simplifiée, 67200 Strasbourg (FR)
(72) Inventeur: REIBEL, Jean-Michel, 67450 Lampertheim (FR)
(74) Mandataire: Nuss, Laurent

(56) Documents cités:
- EP-A1- 1 363 260
- EP-A1- 1 499 154
- FR-A1- 2 787 905

## Description

La présente invention concerne le domaine des communications radiofréquences, plus particulièrement les protocoles de gestion de communications bidirectionnelles s'appuyant sur l'exploitation d'au moins deux canaux de transmission distincts, présentant des caractéristiques différentes en termes de fréquence et de vitesse de transmission ou de taux d'occupation.

L'invention concerne plus particulièrement un procédé de communication bidirectionnelle radiofréquence entre un dispositif maître et des dispositifs esclaves, mettant en oeuvre un multiplexage de transmission de données rapide avec une transmission de données lente, le cas échéant préexistante.

Les documents FR 2 839 594 et EP 1 363 260 divulguent déjà des procédés de communication radiofréquence entre plusieurs éléments hiérarchisés d'un système d'alarme sans fil.

Ces procédés connus mettent en oeuvre un découpage temporel particulier (TDD) associé à une méthode de synchronisation entre les éléments du système (à savoir une centrale ou un dispositif maître, d'une part, et des périphériques ou dispositifs esclaves, d'autre part).

Le découpage temporel précité consiste à définir des fenêtres temporelles successives, avantageusement de durée 1 seconde chacune, qui sont divisées en trois parties, à savoir :
- un premier créneau « TPC » (pour 'temps de parole centrale') qui permet à la centrale (le dispositif « maître ») de communiquer en direction des périphériques (dispositifs « esclave », tels que détecteurs, sirènes, etc),
- un second créneau « TPP » (pour 'temps de parole périphérique') qui permet aux périphériques de transmettre en direction de la centrale,
- un intervalle intermédiaire situé entre le TPC et le TPP et qui peut être exploité comme une extension du TPC lorsque l'importance du trafic le nécessite (appelée 'extension TPC' ou 'ext TPC' par la suite).

En relation avec ce découpage temporel particulier, il y a lieu de prendre en compte les impératifs spécifiques d'attribution et d'exploitation des différentes bandes de fréquences imposées par la réglementation et les normes nationales et internationales, et fonction de la nature du système notamment.

Ainsi, dans le domaine des dispositifs à faible portée, et donc des systèmes d'alarme et de surveillance par exemple, les règles d'occupation des bandes radio découlent de la norme ETSI EN 300220. Ces règles définissent notamment pour chaque domaine d'activité ou application les sous-bandes à utiliser et leurs taux d'occupation respectifs.

Pour les applications d'alarme, les canaux de fréquence se situent selon cette norme dans la plage s'étendant entre 868,0 MHz et 870,0 MHz.

De nombreuses sous-bandes de cette bande de fréquences présentent soit une largeur faible (25 KHz) nécessitant des solutions matérielles onéreuses (quartz très précis, filtrage additionnel, ...) et/ou font état de puissances maximales autorisées trop faibles (5 mW ou 10 mW) pour une exploitation aisée.

En-dehors de ces sous-bandes dont l'exploitation est problématique, on peut noter trois sous-bandes ne faisant pas état des limitations précitées, à savoir :
- 868 - 868.6 MHz : 600 kHz de largeur de bande avec une puissance autorisée de 25 mW, mais une occupation temporelle limitée à 1 % max,
- 868.7 - 869.2 MHz : 500 kHz de largeur de bande avec une puissance autorisée de 25 mW, mais une occupation temporelle limitée à 0,1 % max,
- 869.4 - 869.65MHz : 250 kHz de largeur de bande avec une puissance autorisée de 500 mW, et une occupation temporelle limitée à 10 % max.

Les deux premières portions de plage fréquentielle, avec une occupation temporelle autorisée très faible, sont adaptées au trafic de faible ampleur, tel que les messages de commande (armement/désarmement) ou les signalements d'alarme dont l'occurrence est très réduite. Leurs largeurs de bande, de respectivement 600 et 500 kHz, permettent de définir quatre canaux de communication (appelés « canal lent » ou « canal de service » ci-après), ne nécessitant pas une « étroitesse » qui serait pénalisante d'un point de vue économique.

La dernière portion, avec une occupation temporelle de 10 % et 500 mW de puissance autorisée, est plus adaptée pour les communications dont la durée est importante (10 % correspond à 6 mn/heure en moyenne), telles que la transmission de son ou d'images, tout particulièrement au moment d'une détection d'intrusion (appelé « canal rapide » ou « canal de transfert » ci-après).

L'architecture matérielle commune entre les différents éléments d'un système souhaitant exploiter ces canaux comporte un microcontrôleur assurant le pilotage d'un émetteur/récepteur radio (transceiver) agile en fréquence pour communiquer sur l'une quelconque des sous-bandes mentionnées plus haut.

La demanderesse a développé et commercialisé dans ses produits dénommés Visioguard et Domoguard (marques déposées), un procédé de communication permettant de combiner l'exploitation des canaux situés dans les deux portions (868 - 868.6 MHz et 868.7 - 869.2 MHz) et celle de la sous-bande 869.4 - 869.65 MHz avec un seul émetteur-récepteur ou « transceiver » (par dispositif du système), tout en maintenant la transparence des communications pour les produits de génération antérieure selon les documents FR et EP précités, n'exploitant que le canal rapide précité.

Ce procédé amélioré connu de la demanderesse permet :
- D'exploiter le canal de transfert pour disposer d'une durée d'émission plus importante, et avec une puissance plus élevée, et à une vitesse différente (de préférence plus rapide) de celle utilisée sur les canaux de service,
- De transmettre des données volumineuses, telles que des images ou des séquences vidéo,
- De maintenir la compatibilité avec tous les dispositifs (périphériques et centrales) de génération antérieure pour obtenir une parfaite transparence fonctionnelle, en particulier dans les configurations mixtes (nouvelle centrale associée avec des périphériques d'ancienne et nouvelle génération, c'est-à-dire respectivement incapables ou capables de mettre en oeuvre le procédé amélioré précité),
- De respecter les contraintes normatives relatives à l'exploitation des canaux radio, indiquées ci-dessus.

Pour ce faire, ce procédé amélioré connu consiste à :
- Définir des commandes nouvelles utilisant les canaux de service, permettant :
   > à un périphérique (détecteur équipé d'une caméra par exemple) d'indiquer à la centrale qu'une image ou une séquence vidéo est prête à être transmise (après une détection d'intrusion par exemple)
   > à la centrale d'initier ou de poursuivre la transmission en indiquant que le canal radio à exploiter est le canal de transfert, ou de notifier les données reçues comportant des erreurs de transmission
- De définir une structure de données, appelée "paquet", transmise sur le canal de transfert comportant un entête comprenant entre-autres un identifiant de transfert, un identifiant de paquet, un identifiant d'expéditeur, utilisé par le périphérique pour envoyer les données par paquets successifs.

La transmission des données sur le canal de transfert se matérialise sous la forme d'une succession de paquets de données de longueur fixe, ces paquets se suivant sans acquittement intermédiaire. Le dernier paquet de chaque seconde est envoyé de manière à ne pas empiéter sur le TPP (temps parole périphérique) de la même fenêtre temporelle.

La suite du transfert initié par la centrale prévoit la répétition de certains paquets dont le contenu comporte des erreurs.

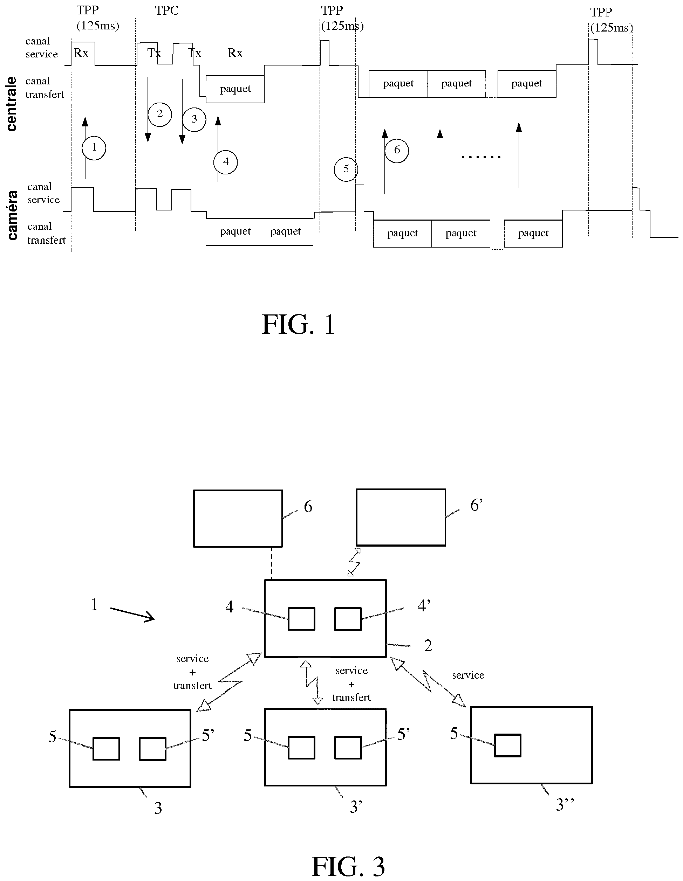

La figure 1 annexée illustre schématiquement, sous forme de chronogramme, un exemple typique de transmission entre un dispositif maître (ici une centrale d'alarme) et un dispositif esclave (ici une caméra), mettant en oeuvre le procédé amélioré précité.

Sur la figure 1 annexée, on repère les opérations 1 à 6 successives suivantes :
1 : la caméra informe la centrale de la disponibilité d'une séquence vidéo ou d'une image,
2 : la centrale acquitte la requête de la caméra,
3 : la centrale envoie une commande à la caméra pour qu'elle transmette les paquets sur le canal de transfert,
4 : après basculement sur le canal rapide, la caméra envoie les paquets de données,
5 : la seconde suivante, le périphérique vérifie l'absence d'émission issue de la centrale pour reprendre la suite du transfert,
6 : les transferts de paquets reprennent automatiquement après vérification de non émission de la centrale.

Le canal de transfert, dans cette forme, est limité en débit par le type de modulation (GFSK) associé au débit binaire qui détermine la largeur du spectre de l'émission radio. Or cette largeur est réglementée par les normes et la puissance du signal à l'émission doit se situer sous la valeur de -30 dBm aux limites de la sous-bande, c'est-à-dire pour les fréquences inférieures à 869.4 MHz et supérieures à 869.65 MHz.

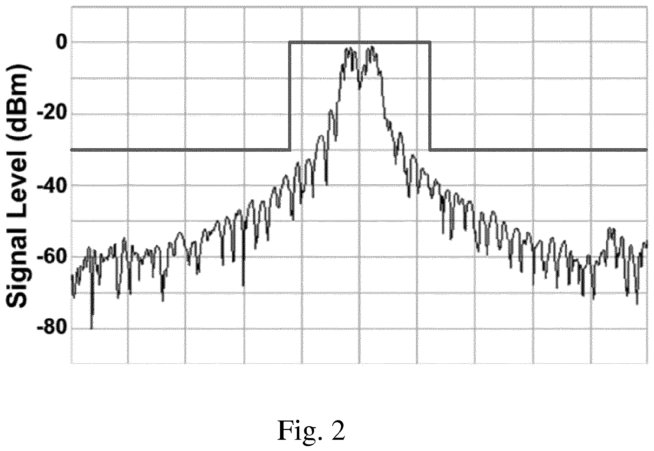

La figure 2 illustre le spectre de fréquence d'une émission à modulation FSK, avec le gabarit matérialisant le canal et la puissance autorisée.

L'homme du métier comprend qu'une augmentation de débit ou de puissance induit nécessairement un dépassement de la largeur autorisée pour le spectre de fréquence en émission.

La présente invention a pour but d'améliorer le procédé mentionné précédemment en vue d'augmenter les possibilités d'exploitation du canal de transfert, notamment en cas de demande ponctuelle importante en ressources de transmission (pluralité d'images vidéo à transmettre), et d'optimiser l'utilisation de ce canal, tout en respectant la réglementation et en conservant une compatibilité de fonctionnement avec des composants d'un système n'ayant pas accès audit canal de transfert.

A cet effet, l'invention a pour objet un procédé de communication bidirectionnelle radiofréquence entre un dispositif central maître, tel qu'une centrale d'alarme par exemple ou analogue, et plusieurs dispositifs périphériques esclaves, tels que des capteurs ou des détecteurs, qui sont associés à des caméras et/ou à des micros, des haut-parleurs, des actionneurs, des organes de commande ou de signalisation, ces dispositifs étant tous physiquement séparés et indépendants, mais faisant tous partie d'un même système, tel qu'un système d'alarme ou de surveillance par exemple,

ce procédé utilisant un canal de service correspondant à une ou plusieurs bande(s) de fréquence avec une disponibilité temporelle faible et un canal de transfert correspondant à une ou plusieurs autre(s) bande(s) de fréquence avec une disponibilité temporelle limitée mais plus grande que pour le canal de service, le canal de service étant normalement dévolu à l'échange de messages de commande ou de signalement et le canal de service étant normalement dévolu à l'échange de paquets de données, essentiellement des dispositifs esclaves adaptés vers le dispositif maître, du type images vidéo, et éventuellement du type signaux audio,

ce procédé mettant en oeuvre, de manière combinée sur les deux canaux précités, un duplexage par répartition dans le temps avec une trame temporelle répétitive directrice qui est constituée de fenêtres temporelles identiques successives prédéfinies en termes de calage temporel, de durée et de structuration, et qui comprend, d'une part, des premiers créneaux temporels, de durée prédéterminée, réservés prioritairement pour une éventuelle communication descendante du dispositif maître vers un ou plusieurs dispositifs esclaves, d'autre part, des seconds créneaux temporels, de durée prédéterminée, réservés prioritairement pour une éventuelle communication montante d'un des dispositifs esclaves vers le dispositif maître et, enfin, des intervalles temporels intermédiaires non affectés s'étendant chacun de la fin d'un premier créneau au début d'un second créneau consécutif, lesdits créneaux présentant des durées prédéterminées et étant arrangés temporellement de manière répétitivement alternée, avec les intervalles temporels intermédiaires, dans les fenêtres temporelles successives, dont chacune comprend un premier créneau, un second créneau et un intervalle intermédiaire ,

le dispositif maître et les dispositifs esclaves comportant chacun un microcontrôleur et un émetteur-récepteur radio, ces derniers fonctionnant, pour le dispositif maître et au moins certains des dispositifs esclaves équipés de manière adéquate, en mode alternat et pouvant être sélectivement commutés, par le microcontrôleur associé, entre les canaux de transfert et de service et être amenés à changer sélectivement de mode de fonctionnement, entre un mode écoute ou réception et un mode émission pour chacun des deux canaux, au moins les dispositifs esclaves étant pourvus de sources d'énergie autonomes,
procédé caractérisé :
en ce que la trame temporelle directrice est mise en place sur le canal de service,
en ce que le basculement sélectif des différents dispositifs du système entre les deux canaux est commandé par le dispositif maître, et en ce que la gestion du basculement consiste à réaliser, d'une part, un basculement automatique vers le canal de service avant l'occurrence de chaque second créneau ou de chaque premier créneau avec une phase d'activité prévue et, d'autre part, un basculement vers le canal de transfert à la fin d'une phase d'activité sur le canal de service durant un créneau considéré ou d'une absence d'activité sur le canal de service pendant une durée prédéterminée à partir du début d'un créneau, le dispositif maître basculant entre les deux canaux durant chaque fenêtre temporelle et seul le dispositif esclave concerné par une transmission montante à venir vers le dispositif maître étant basculé sur le canal de transfert et demeurant sur ce dernier jusqu'à la fin de la transmission considérée,
et en ce que le dispositif maître détermine, en l'absence d'activité sur le canal de service ou à la fin d'une phase d'activité en communication montante ou descendante sur le canal de service, durant un premier ou un second créneau, une durée de disponibilité à venir du canal de transfert soit jusqu'au prochain premier créneau avec une phase d'activité, soit jusqu'au second créneau de la prochaine fenêtre, ce en fonction du type de créneau dans lequel débute ladite durée, cette information de durée étant à chaque nouvelle détermination transmise au dispositif esclave concerné par une transmission montante à venir ou en cours sur le canal de transfert.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 3 est une représentation schématique d'un système selon l'invention comprenant notamment un dispositif maître et des dispositifs esclaves ;

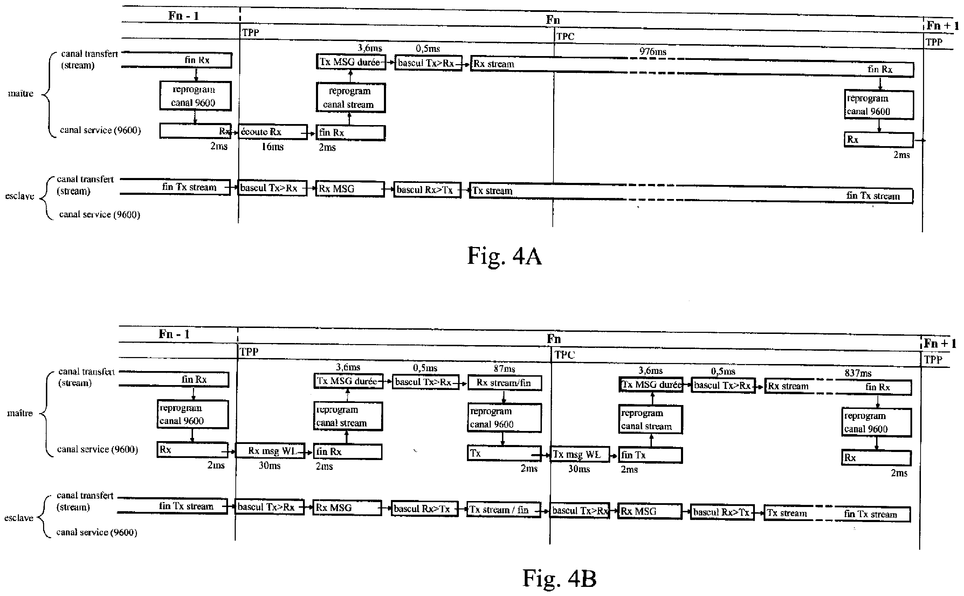

les figures 4A et 4B sont des chronogrammes d'échanges entre le dispositif maître et l'un des dispositifs esclaves sur les canaux de service et de transfert, durant deux fenêtres temporelles consécutives Fₙ₋₁ et Fₙ dans le cadre de deux déroulements possibles de transmission par application du procédé selon l'invention, respectivement dans le cas le plus favorable (par de message sur la voie montante durant le second créneau TPP de la fenêtre Fₙ) et dans le cas le plus défavorable (messages sur la voie descendante durant le TPC au cours de la fenêtre Fₙ) ;

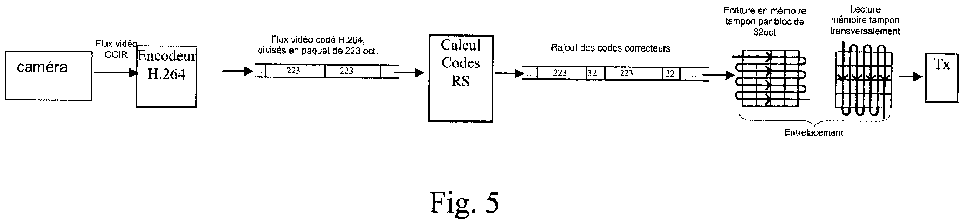

la figure 5 est un schéma bloc illustrant les opérations successives appliquées à un flux de données (par exemple un flux vidéo délivré par une caméra) dans un dispositif équipé du système selon l'invention avant sa transmission Tx par l'émetteur-récepteur radiofréquence dudit dispositif sur le canal de transfert, et,

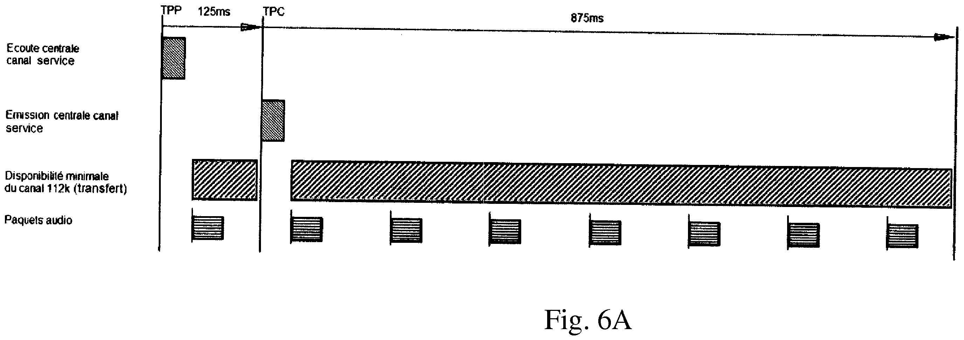

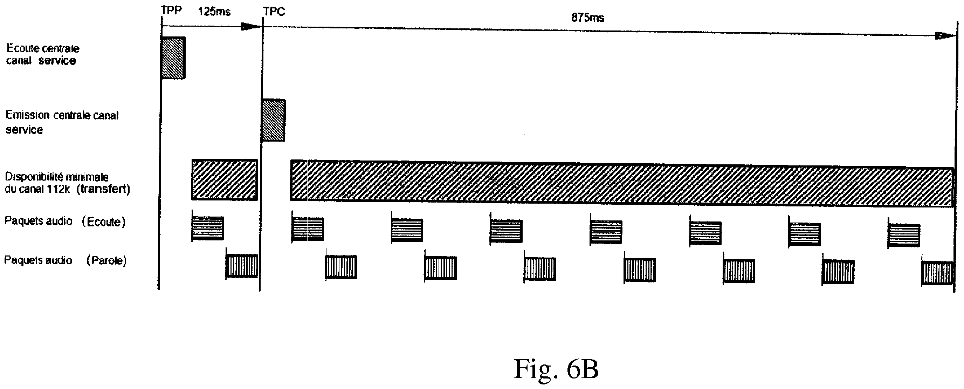

les figures 6A et 6B sont des chronogrammes partiels du début d'une fenêtre temporelle illustrant la transmission de paquets de données audio entre le dispositif maître et l'un des dispositifs esclaves du système de la figure 3, selon deux variantes de réalisation de l'invention (Figure 6A : mode semi-duplex / Figure 6B : mode duplex intégral).

Comme l'illustrent au moins en partie les figures 3 à 5 des dessins annexés, l'invention porte sur un procédé de communication bidirectionnelle radiofréquence entre un dispositif central maître 2, tel qu'une centrale d'alarme par exemple ou analogue, et plusieurs dispositifs périphériques esclaves 3, 3', 3", tels que des capteurs ou des détecteurs, qui sont associés à des caméras et/ou à des micros, des haut-parleurs, des actionneurs, des organes de commande ou de signalisation, ces dispositifs 2, 3, 3', 3" étant tous physiquement séparés et indépendants, mais faisant tous partie d'un même système 1, tel qu'un système d'alarme ou de surveillance par exemple.

Ce procédé utilise à la fois un canal de service correspondant à une ou plusieurs bande(s) de fréquence avec une disponibilité temporelle faible et un canal de transfert correspondant à une ou plusieurs autre(s) bande(s) de fréquence avec une disponibilité temporelle limitée mais plus grande que pour le canal de service, le canal de service étant normalement dévolu à l'échange de messages de commande ou de signalement et le canal de service étant normalement dévolu à l'échange de paquets de données, essentiellement des dispositifs esclaves 3, 3', 3" adaptés (c'est-à-dire équipés pour une transmission/réception sur les deux canaux) vers le dispositif maître 2, du type images vidéo éventuellement.

Ce procédé met en oeuvre, de manière combinée sur les deux canaux précités, un duplexage par répartition dans le temps TDD avec une trame temporelle répétitive directrice qui est constituée de fenêtres temporelles F identiques successives prédéfinies en termes de calage temporel, de durée et de structuration, et qui comprend, d'une part, des premiers créneaux temporels TPC, de durée prédéterminée, réservés prioritairement pour une éventuelle communication descendante du dispositif maître 2 vers un ou plusieurs dispositifs esclaves 3, 3', 3", d'autre part, des seconds créneaux temporels TPP, de durée prédéterminée, réservés prioritairement pour une éventuelle communication montante d'un des dispositifs esclaves 3, 3', 3" vers le dispositif maître 2 et, enfin, des intervalles temporels intermédiaires non affectés ExtTPC s'étendant chacun de la fin d'un premier créneau TPC au début d'un second créneau TPP consécutif, lesdits créneaux TPC et TPP présentant des durées prédéterminées et étant arrangés temporellement de manière répétitivement alternée, avec les intervalles temporels intermédiaires (ExtTPC), dans les fenêtres temporelles F successives, dont chacune comprend un premier créneau TPC, un second créneau TPP et un intervalle intermédiaire ExtTPC.

Bien entendu, les différentes fenêtres temporelles F peuvent chacune débuter soit par un premier créneau TPC, soit par un second créneau TPP (mode de réalisation représenté figures 1, 4A et 4B).

En mode de fonctionnement transmission montante, un unique dispositif esclave 3, 3' 3" est autorisé à émettre vers le dispositif maître 2. Le dispositif maître 2 quant à lui peut, dans le cadre d'une transmission descendante, émettre vers un, plusieurs ou tous les dispositifs esclaves 3, 3', 3", ce en fonction des circonstances et du type de message à transmettre.

Le dispositif maître 2 et les dispositifs esclaves 3, 3', 3" comportent chacun un microcontrôleur 4, 5 et un émetteur-récepteur radio 4', 5', ces derniers fonctionnant, pour le dispositif maître 2 et au moins certains des dispositifs esclaves 3, 3', 3" équipés de manière adéquate, en mode alternat et pouvant être sélectivement commutés, par le microcontrôleur 4, 5 associé, entre les canaux de transfert et de service et être amenés à changer sélectivement de mode de fonctionnement, entre un mode écoute ou réception Rx et un mode émission Tx pour chacun des deux canaux, au moins les dispositifs esclaves 3, 3', 3" étant pourvus de sources d'énergie 5" autonomes. Pour les dispositifs 3, 3', 3" non équipés éventuellement présents dans le système 1, le dispositif maître 2 ne communiquera que sur le canal de service.

Le dispositif maître 2 peut, notamment dans le cas d'un système 1 d'alarme, interagir avec des dispositifs esclaves 3, 3', 3" de natures diverses.

Ainsi, en plus des exemples déjà mentionnés, on peut également évoquer une borne de saisie ou un lecteur de badges.

De même, ce dispositif maître 2 d'un système donné peut être relié par une liaison filaire ou radio à un dispositif central 6 distant interagissant avec, et gérant à distance, une pluralité de systèmes 1 locaux disséminés.

En outre, ce dispositif maître 2 peut également être mis en relation avec un utilisateur ou un opérateur au moyen d'une interface de communication 6' adaptée, le cas échéant mobile et distante (par exemple application sur téléphone mobile, tablette ou ordinateur personnel).

Conformément à l'invention, la trame temporelle directrice est mise en place sur le canal de service. De plus, le basculement sélectif des différents dispositifs 2, 3, 3', 3" du système 1 entre les deux canaux est commandé par le dispositif maître 2, et la gestion du basculement consiste à réaliser, d'une part, un basculement automatique vers le canal de service avant l'occurrence de chaque second créneau TPP ou de chaque premier créneau TPC avec une phase d'activité prévue et, d'autre part, un basculement vers le canal de transfert à la fin d'une phase d'activité sur le canal de service durant un créneau TPC, TPP considéré ou d'une absence d'activité sur le canal de service pendant une durée prédéterminée à partir du début d'un créneau TPP, TPC, le dispositif maître 2 basculant entre les deux canaux durant chaque fenêtre temporelle F et seul le dispositif esclave 3, 3', 3" concerné par une transmission montante à venir vers le dispositif maître 2 étant basculé sur le canal de transfert et demeurant sur ce dernier jusqu'à la fin de la transmission considérée.

Le dispositif maître 2 détermine, en l'absence d'activité sur le canal de service ou à la fin d'une phase d'activité en communication montante ou descendante sur le canal de service, durant un premier ou un second créneau TPC, TPP, une durée de disponibilité DD à venir du canal de transfert soit jusqu'au prochain premier créneau TPC avec une phase d'activité, soit jusqu'au second créneau TPP de la prochaine fenêtre F, ce en fonction du type de créneau TPC ou TPP dans lequel débute ladite durée DD, cette information de durée DD étant à chaque nouvelle détermination transmise au dispositif esclave 3, 3', 3" concerné par une transmission montante à venir ou en cours sur le canal de transfert.

Grâce à l'invention, il est donc possible d'optimiser l'occupation temporelle du canal de transfert tout en conservant une compatibilité de fonctionnement entre les différents dispositifs 3, 3' ,3" équipés ou non équipés d'un émetteur-récepteur 5' multicanaux, en termes de gestion des communications entre eux, en conservant la même trame temporelle directrice et la transmission des messages de commande destinés à tous les types de dispositifs du système 1, ainsi que la synchronisation de ces derniers, sur le canal de service.

De manière avantageuse, et en vue d'aboutir à une maximisation de l'occupation temporelle du canal de transfert, il peut être prévu que la valeur d'une durée de disponibilité DD calculée par le dispositif maître 2 correspond à chaque fois à la durée temporelle s'écoulant entre le prochain basculement du système 1 sur le canal de transfert et le prochain rebasculement consécutif dudit système 1 sur le canal de service et en ce que cette valeur de durée de disponibilité représente soit une durée restante d'un premier créneau TPC additionnée de la durée de l'intervalle temporel intermédiaire ExtTPC consécutif de la même fenêtre F, soit une durée restante d'un second créneau TPP, ou encore la somme de la durée restante d'un second créneau TPP, de la durée du premier créneau TPC consécutif de la fenêtre F suivante et de la durée de l'intervalle temporel intermédiaire ExtTPC suivant de cette même fenêtre F, ce en fonction de l'occurrence ou non de transmission(s) durant les premier et second créneaux TPC, TPP concernés.

Une telle disposition permet de limiter les basculements entre les deux types de canaux, qui génèrent des temps morts en termes de disponibilité effective et d'accessibilité en transmission du canal de transfert en particulier.

Selon une autre caractéristique selon l'invention allant dans le même sens, il peut être prévu que, en-dehors des premiers créneaux temporels TPC, chacun des dispositifs esclaves 3, 3', 3" équipé d'un émetteur-récepteur 5' multicanaux sont en permanence et par défaut en mode écoute ou réception Rx sur le canal de transfert, à l'exception du dispositif esclave 3, 3', 3" éventuellement actif en mode émission.

Préférentiellement, et comme le montrent les figures 4A et 4B, la durée de disponibilité DD du canal de transfert est transmis par le dispositif maître 2 au dispositif esclave 3, 3', 3" concerné par une prochaine transmission montante sur le canal de transfert, après basculement dudit dispositif esclave sur ce canal, la valeur de durée DD communiquée étant à chaque fois ajustée de la durée de transmission du message contenant ladite valeur et, le cas échéant, de la durée du changement de mode de fonctionnement des émetteurs-récepteurs radio 4', 5' des différents dispositifs 2, 3, 3', 3", le dispositif maître 2 basculant automatiquement en mode écoute ou réception Rx sur ledit canal de transfert après transmission de ladite durée DD.

Pour pouvoir prendre en compte les occupations temporelles limitées imposées des canaux fréquentiels attribués à l'application concerné par le système 1, d'une part, et pouvoir gérer les durées restantes pour chaque dispositif, et prévoir notamment une réserve de sécurité, le procédé peut consister, par l'intermédiaire d'un moyen de comptage/décomptage associé à chaque dispositif 2, 3, 3', 3" du système 1, avantageusement intégré au microcontrôleur 4, 5 concerné, à comptabiliser de manière continue la durée restante d'autorisation d'émission pour chaque dispositif 2, 3, 3', 3", au moins pour le canal de transfert, en appliquant une méthode de détermination glissante dans le temps, les valeurs desdites durées restantes étant centralisées et gérées au niveau du dispositif maître 2 avec un rafraîchissement périodique et une diffusion aux dispositifs esclaves 3, 3',3" .

Comme cela ressort des figures 4 et 5 et comme déjà partiellement prévu dans le procédé décrit en introduction, la transmission des données vidéo sur le canal de transfert est une transmission par paquets successifs et de même longueur chacun, sans acquittement intermédiaire, le dernier paquet d'une fenêtre temporelle F devant être réceptionné par le dispositif 2, 3, 3', 3" concerné avant le début du second créneau TPP de cette fenêtre. Chaque paquet comporte un entête comprenant notamment un préambule de calage, une séquence de synchronisation et des paramètres d'identification du dispositif destinataire, et le procédé peut avantageusement consister à utiliser, pour chaque paquet à transmettre, une premier type de modulation et une première vitesse de transmission pour l'entête et un second type de modulation plus complexe et une seconde vitesse de transmission plus élevée pour la zone de données de chaque paquet, par exemple avec une modulation GFSK de 56 kbauds pour l'entête et une modulation 4GFSK de 56 kbauds pour la zone de données, l'encodage des données étant avantageusement du type H 264 ou MPEG-4 AVC.

Pour pouvoir garantir une fiabilité de transmission suffisante pour les données, en particulier compte tenu de l'absence d'acquittement et de possibilité de répétition des paquets en cas d'erreurs, il peut être prévu de mettre en oeuvre, notamment lors d'une transmission en temps réel ou quasi temps réel sur le canal de transfert, après encodage et structuration des données vidéo en blocs et desdits blocs en paquets, un mécanisme de détection-correction d'erreurs de type Reed-Solomon associé à un mécanisme d'entrelacement/désentrelacement pour le conditionnement des données avant leur transmission par paquets et leur déconditionnement après réception.

Plus précisément, le procédé peut consister, au niveau du dispositif 2, 3, 3', 3" émetteur et après division des données vidéo à transmettre en blocs, puis en paquets, à calculer les codes correcteurs RS pour chaque bloc et à les intercaler, dans un flux linéaire, entre le bloc concerné par un code RS donné et le bloc suivant, à enregistrer ces blocs et leurs codes associés respectifs de manière séquentielle dans une mémoire tampon à structure matricielle à deux dimensions et à effectuer une lecture de cette mémoire tampon, en vue de leur regroupement et transmission en paquets, avec un balayage orienté transversalement par rapport à celui appliqué pour l'enregistrement. Le ou les dispositifs 2, 3, 3', 3" récepteur(s) effectuent bien entendu les opérations inverses pour récupérer les données des blocs des paquets réceptionnés et de leurs codes associés, avant d'appliquer la correction d'erreurs.

En accord avec une réalisation pratique avantageuse, les matrices de la mémoire tampon présentent toutes une taille de 38 octets et chaque paquet est constitué de plusieurs, par exemple quatre blocs de données vidéo encodées de 223 octets et leurs codes RS associés de 32 octets chacun, la taille de chaque bloc étant ajustée à 256 octets.

En fonction des domaines d'application du procédé selon l'invention, et du type de données à transmettre, l'initiative des échanges peut être d'origines diverses.

Ainsi, la transmission de données sur le canal de transfert d'un dispositif esclave 3, 3', 3" adapté vers le dispositif maître 2 est réalisée, de manière programmée, suite à une requête préalable, unique ou répétée, adressée par ledit dispositif maître 2 aux dispositifs esclaves 3, 3', 3" concernés ou, de manière spontanée, à l'initiative du dispositif esclave 3, 3', 3" concerné, suite à l'occurrence d'un évènement affectant ledit dispositif esclave, la transmission spontanée étant prioritaire et la transmission programmée n'étant démarrée ou poursuivie que si le dispositif esclave 3, 3', 3" sollicité par la requête dispose d'une durée restante d'autorisation d'émission supérieure à une valeur limite inférieure.

Pour des raisons de gestion d'autonomie énergétique, de maintenance, d'analyse statistique du trafic et/ou d'évaluation économique, le procédé peut également consister, pour au moins certains dispositifs esclaves 3, 3', 3", à comptabiliser la durée totale d'émission au moyen d'un compteur correspondant et à transmettre soit à intervalles réguliers un message informatif, soit, le cas échéant, un message d'alerte au dispositif maître 2.

Le procédé selon l'invention, dont les caractéristiques essentielles ont été exposées précédemment, est décrit de manière plus détaillée ci-après, en relation avec la transmission de données du type images vidéo et sons, ainsi que de messages d'instructions ou d'informations, et dans le contexte d'un système d'alarme comportant une centrale 2 et des périphériques 3, 3', 3" du type capteurs de caméras et/ou de micros.

Il est rappelé que le but premier de l'invention est d'augmenter le débit du canal de transfert tout en conservant la compatibilité des dispositifs esclaves antérieurs, n'ayant éventuellement pas accès à ce canal.

Pour atteindre le but précité, l'invention vise tout d'abord à atteindre une occupation temporelle maximale du canal de transfert.

Or, la durée théorique d'occupation du canal de transfert correspond plus ou moins à la totalité du temps (100 %) déduction faite des durées durant lesquelles l'émetteur-récepteur 4' de la centrale 2 est occupée sur le canal de service (que ce soit en réception ou en émission) auxquelles se retranchent également les temps morts liés au pilotage dudit émetteur-récepteur (par exemple temps nécessaire pour modifier le canal radio, ou bien temps de stabilisation de la PLL).

Pour ce faire, non seulement le canal de transfert est mis en oeuvre durant l'intervalle temporel (Ext TPC) situé entre le TPC et le TPP, mais également une partie au moins du TPP. En effet, il s'avère que dans de nombreux cas, l'intervalle TPP répétitif et de durée prédéterminée reste vide. Lorsque ce dernier vaut 125 ms, environ 100 ms restent « disponibles » en l'absence de message, et encore 87 ms environ en présence de message.

En outre, la centrale 2 anticipe avantageusement le fait qu'elle aura- ou non, une communication à effectuer durant le TPC. Dans le cas où il n'y en a pas, la durée non exploitée du TPP est avantageusement fusionnée avec la durée du TPC (Ext TPC) et celle de l'extension TPC en un seul intervalle, ce qui a pour effet de réduire notablement les temps morts.

Pour obtenir le fonctionnement souhaité, il est prévu un mécanisme qui permette d'exploiter ces durées, sans compromettre les éventuels échanges sur le canal de service entre les périphériques 3, 3', 3" et la centrale 2.

Ce mécanisme doit autant que possible limiter les « aller-retours » entre le canal de service et le canal de transfert.

Pour minimiser ces temps de basculement de configuration (changement de canal) et améliorer la réactivité du système 1, il est prévu que les périphériques 3, 3', 3" restent en écoute permanente sur le canal de transfert (« streaming ») lorsqu'ils n'émettent pas eux-mêmes.

Pour fixer les ordres de grandeur, pour le changement de canal (avec les paramètres associés), la durée est d'environ 2ms alors que pour un changement de mode (Rx vers Tx ou inversement) sur le même canal ne nécessite que 0,5 ms.

Pour augmenter l'occupation temporelle du canal de transfert, la centrale 2 peut effectuer un calcul de la durée disponible DD en fonction du contexte dans lequel elle se trouve.

A ce sujet, plusieurs cas de figure peuvent être identifiés :
- Si aucun message n'est reçu durant le TPP, et qu'aucun message à émettre n'est planifié dans le TPC, la centrale 2 va définir une durée disponible pour la transmission sur le canal de transfert allant de l'instant courant (diminué de la durée nécessaire à la transmission de cette durée, soient environ 4,1ms ; voir diagrammes des figures 4A et 4B) jusqu'au début du TPP suivant,
- Si aucun message n'est reçu durant le TPP, mais que la centrale doive émettre un message dans le TPC, la durée disponible DD sera limitée au début dudit TPC. Un deuxième calcul sera réalisé à la fin du traitement relatif à la communication du TPC,
- Si un message est reçu durant le TPP, la centrale 2 calcule la durée disponible DD selon qu'une réponse est requise ou non, c'est-à-dire une première durée correspondant à la fin du TPP suivie d'une deuxième durée dans l'extension TPC après réponse de la centrale 2, ou bien une durée cumulée unique s'il n'y a pas de réponse de la centrale 2.

Ces durées déterminées par la centrale 2 sont systématiquement transmises par elle au début de chaque période de disponibilité, sans quoi, le périphérique concerné 3, 3', 3" ne transmet rien et maintient son écoute sur le canal streaming.

Une autre disposition prévue par l'invention pour optimiser les ressources de transmission consiste à améliorer l'occupation spectrale du canal de transfert.

A cet effet, il peut être prévu d'exploiter, au moins pour la transmission des données, des modulations du type connu sous la désignation 4 GFSK ou OFDM, très performants (transport de plusieurs bits par symbole), mais dont la robustesse est plus faible (plus grande sensibilité aux parasites et aux brouilleurs).

Pour pouvoir bénéficier des avantages de ces modulations plus performantes tout en limitant ou en évitant les inconvénients liés à leur robustesse moindre, l'invention prévoit plusieurs mesures.

Ainsi, il est prévu d'améliorer la capture des paquets.

En effet, lors d'une transmission, chaque paquet est précédé d'un entête, qui constitue en quelque sorte l'amorce et qui commence par un motif binaire appelé préambule, constitué d'une alternance de 0 et de 1, permettant au récepteur de se « caler » sur l'émetteur, notamment le contrôle automatique de fréquence (CAF) et de gain (CAG). Le préambule est suivi par un « mot » de synchronisation qui est un motif binaire reconnu par le récepteur et qui sert de marqueur pour synchroniser le flux binaire au niveau octet. Suivent ensuite des paramètres d'identification qui permettent au récepteur de discriminer la séquence en cours de réception vis-à-vis d'autres émetteurs (non désirés).

Comme expliqué précédemment, l'augmentation du débit conduisant à une plus grande vulnérabilité, si par exemple le mot de synchronisation comporte un bit d'erreur, l'amorçage de la réception ne sera pas réalisé et le paquet complet sera perdu, quel que soit le mécanisme de correction incorporé dans ledit paquet. Il est donc avantageux de « durcir » l'amorce du paquet pour maximiser ses chances de capture par le récepteur. Comme cette amorce comporte un nombre réduit d'octets, l'invention préconise de mettre en oeuvre une vitesse de transmission réduite pour l'entête, tout en adoptant une vitesse plus élevée pour la zone de données du paquet. De cette manière on obtient une plus grande robustesse du paquet sans pénaliser de manière significatif le débit utile du canal de transmission.

En pratique, on prévoit l'entête en modulation GFSK à environ 56kbauds (1 bit par symbole soient 56kbps) et la partie données en modulation 4GFSK à 56kbauds (2 bits par symbole soient 112kbps).

En outre, une autre mesure de sécurisation de la transmission des paquets de données prévue par l'invention est liée à l'impossibilité de mettre en oeuvre une répétition de la transmission en cas d'erreur.

En effet, le fait de requérir une retransmission d'un paquet dans lequel une erreur a été identifiée à la réception, est incompatible avec une transmission en temps réel ou quasi temps réel (latence trop importante).

De plus, dans le contexte d'application particulier de l'invention, la nature des données, de la vidéo ou de l'audio compressé numériquement, peut conduire à une perte de la séquence complète (constituée de plusieurs paquets successifs) par la présence d'un seul bit faux à l'intérieur d'un bloc ou d'un paquet. Ceci est dû par un effet de propagation d'erreur au niveau du décodeur audio ou vidéo : le bit faux va désynchroniser le flux d'informations qui suit le bit faux et amplifier ainsi « l'inintelligibilité » des données. En pratique, plus le procédé de compression est performant (réduction des données à transmettre pour une qualité d'image donnée), plus il sera sensible aux erreurs.

A titre d'exemple, sur la base d'un codage vidéo au format H.264, 1 seul bit faux sur 1000 se traduit par un refus des « player » H.264 de démarrer l'affichage. Avec 1 bit sur 50000, on peut voir une vidéo comportant de nombreux artefacts, à peine exploitable. A partir d'un bit faux pour 200000, on commence à obtenir une vidéo partiellement exploitable.

Pour pallier ce problème, le procédé met avantageusement en oeuvre un mécanisme de détection-correction d'erreur de type Reed-Solomon (RS), associé à un mécanisme d'entrelacement / désentrelacement (qui ne constituent pas directement l'objet de ce brevet). Ce procédé de correction d'erreur permet de récupérer la plupart des erreurs de transmission (groupées ou isolées), au détriment d'une occupation supplémentaire de la bande passante d'environ 15%, mais sans latence significative.

Pour obtenir une protection par entrelacement optimum, on utilise une taille de paquet dont la valeur est une puissance de 2 élevée au carré. Dans le mode de réalisation retenu, la valeur 1024 est adoptée et correspond à 32 blocs de 32 octets. Elle correspond également (à 4 octets près) à 4 paquets vidéo formés de 223 octets de données associées au code correcteur RS de 32 octets, soient 255 octets.

Les blocs constitués des données vidéo associées aux codes correcteurs sont enregistrés dans une mémoire tampon de manière séquentielle, puis sont relus pour la transmission de manière transversale.

Les principales étapes mises en oeuvre au niveau du dispositif émetteur sont illustrées sur la figure 5 annexée.

Avec le mécanisme précité, deux octets consécutifs lors de l'écriture dans la mémoire tampon, se retrouvent séparés de la valeur √(1024), soient de 32 octets. Si un brouillage intervient de manière prolongée, une fois l'opération de désentrelacement réalisée coté récepteur, les erreurs contiguës se retrouveront dispersées et isolées, et donc plus facilement corrigeables.

Dans le cadre de l'application préférée décrite, un aspect fonctionnel important est constitué par les possibilités d'exploitation de la transmission de données vidéo montante, des dispositifs esclaves périphériques 3, 3', 3" équipés de caméras et aptes à transmettre sur le canal de transfert vers le dispositif maître central 2. Ces données vidéo peuvent ensuite être acheminées depuis la centrale 2 à distance du lieu d'implantation du système 1.

Deux cas de figures d'exploitation sont à envisager :
- Le premier est un usage temps réel. Il est destiné principalement à l'usager (fonction dite « look-in ») et lui permet de visualiser son domicile à distance (sur une interface du type mobile, tablette ou PC). Dans ce mode, la notion « temps réel » est prédominante, et le débit binaire issu de la caméra doit s'ajuster à la capacité du canal, éventuellement en réduisant le niveau de qualité vidéo si besoin. Dans cet usage, c'est la centrale qui reçoit une requête venant de l'extérieur et qui la communique à la caméra.
- Le deuxième usage concerne le déclenchement d'une alarme. La caméra doit alors filmer une séquence courte (typiquement une dizaine de seconde) lorsqu'elle détecte un mouvement alors qu'elle est activée (armée), et débutant à l'instant du déclenchement permettant à la société de télésurveillance de discriminer les cas de fausse alarme. Cet usage n'étant pas « temps réel », la séquence vidéo peut mettre quelques secondes supplémentaires pour être transmise par la caméra, il est alors possible de paramétrer l'encodeur H.264 pour délivrer une qualité vidéo sensiblement meilleure que dans le cas précédent.

Dans la norme ETSI EN 300220 régissant l'usage des fréquences, le canal de transfert utilisé pour la transmission vidéo est spécifié pour une occupation maximale de 10%. Ceci correspond à une durée de 360s par heure glissante.

Comme indiqué précédemment, la caméra comporte un moyen de comptage/décomptage qui comptabilise la durée d'émission restante autorisé. Chaque seconde d'émission effective vient réduire la durée restante de la valeur équivalente. Chaque seconde sans émission verra le compteur s'incrémenter de 0,1s, avec un maximum à 360s. Dans la mesure où cette durée pourrait être totalement exploitée lors d'un « look-in », il convient de réserver une fraction de cette durée pour permettre l'envoi d'une vidéo en cas d'une détection d'intrusion. En réservant par exemple 15 secondes, l'usager ne disposera que d'un crédit de 345s maximum pour la fonction look-in.

La durée restante est transmise à la centrale de manière régulière (dans l'entête des paquets de données vidéo) ce qui lui permet de remonter cette information vers le terminal de l'utilisateur qui pourra afficher un avertissement lorsque la durée restante passera sous un seuil prédéterminé.

Un autre compteur pourra cumuler la totalité des transmissions de manière à pouvoir effectuer un calcul d'autonomie prévisionnel. Ce compteur pourra être remis à zéro à chaque changement de pile.

Compte tenu des évolutions de normes et de formats, les destinataires des vidéos peuvent être plus au moins « à jour » au niveau du « player » assurant la visualisation de la vidéo. Pour maintenir opérationnelle la capacité de visualisation, la caméra peut comporter au moins un format de codage vidéo supplémentaire, et antérieur au format de codage le plus récent. Par exemple en codage alternatif au format H.264, on pourra activer le codage MPEG1.

Pour ce faire, la centrale échange avec le système destinataire le niveau supporté par ce dernier, ce qui permet à la centrale de sélectionner le format souhaité au niveau de la caméra de manière appropriée. Cette détermination du niveau supporté est réalisée de manière récurrente de manière à ce qu'une mise à jour soit répercutée rapidement au niveau du système d'alarme.

L'invention porte aussi sur la transmission de signaux audio entre le dispositif maître 2 et les dispositifs esclaves 3, 3', 3" adaptés, par exemple du type interphone, capteur équipé d'un microphone ou d'un haut-parleur ou analogue.

En relation avec cet aspect, et comme le montrent les figures 6A et 6B, le procédé peut consister, pour la transmission bidirectionnelle de signaux audio entre le dispositif maître 2 et les dispositifs esclaves 3, 3', 3", à réaliser une transmission isochrone quasi temps réel par paquets, en mode semi-duplex ou en mode duplex intégral, chaque paquet de données audio étant constitué par acquisition, codage et/ou compression et accumulation d'un certain nombre d'échantillons sonores collectés au niveau d'un dispositif esclave 3, 3', 3" ou non, faisant partie du système 1 ou non et équipé de moyens d'acquisition adéquats.

A titre d'exemple de dispositif ne faisant pas partie directement du système 1 et pouvant néanmoins adressé des messages audio au dispositif maître 2, en vue de leur transmission et diffusion au niveau d'au moins un dispositif esclave 3, 3', 3", on peut notamment évoquer par exemple le micro d'un opérateur d'une société de télésurveillance distante permettant de diffuser un message de mise en garde un niveau d'une habitation équipée du système 1.

Afin d'éviter des latences trop importantes nuisibles au confort de l'utilisateur et de simplifier la transmission, il est avantageusement prévu que les paquets de données audio présentent une taille nettement inférieure, par exemple moitié ou un quart, à celle des paquets de données vidéo et que l'espacement temporel entre paquets de données audio successifs est nettement supérieur à la durée de transmission d'un tel paquet. En outre, il peut être prévu qu'un message de durée de disponibilité soit adressé par le dispositif maître 2 au dispositif esclave 3, 3', 3" concerné avant la transmission d'un premier paquet de données audio d'une transmission et/ou que chaque paquet de données audio comporte dans son entête un indicateur de poursuite ou d'arrêt de la transmission en cours.

Comme le montre la figure 6A, et compte tenu d'un fonctionnement en configuration semi-duplex (soit : acquisition audio ou écoute ; soit : restitution audio ou émission de sons ou de messages), une direction principale de transfert est déterminée.

En début de communication, le dispositif maître 2, par exemple une centrale, envoie un message de durée de disponibilité au dispositif esclave concerné avant le premier paquet de données audio de chaque fenêtre temporelle commençant par un créneau TPP (non représenté sur la figure 6A), qui permet de stopper ou d'inverser le mode de fonctionnement (émission ou acquisition audio). Compte tenu de l'espacement temporel entre paquets, l'émission d'un tel message n'est pas nécessaire durant le créneau TPC.

Sur le chronogramme de la figure 6A :
- les deux premières lignes (du haut) illustrent l'indisponibilité de la transmission radio (canal de transfert), du fait de sa mobilisation sur le canal de service au niveau de la centrale ;
- la troisième ligne illustre la disponibilité temporelle prévisible pour un transfert ;
- la quatrième ligne illustre la transmission des paquets de données audio (par exemple des paquets de 512 octets espacés de 125 ms).

En mode duplex intégral, et comme le montre la figure 6B, le dispositif maître 2 (par exemple une centrale d'alarme) et le dispositif esclave 3, 3', 3" concerné (par exemple un interphone) alternent en permanence entre émission et réception, permettant par ce basculement répétitif d'obtenir un flux dans les deux sens (montant et descendant).

Sur la figure 6B, les trois premières lignes sont similaires aux trois premières lignes de la figure 6A et les quatrième et cinquième lignes illustrent les paquets entrelacés temporellement de la transmission montante (flux "écoute" de la centrale) et de la transmission descendante (flux "parole" de la centrale).

L'invention a également pour objet, comme illustré schématiquement sur la figure 3, un système 1 d'alarme comprenant une centrale faisant office de dispositif maître 2 et au moins plusieurs capteurs, détecteurs ou périphériques analogues faisant office de dispositifs esclaves 3, 3', 3" et dont au moins certains sont associés à des caméras, ces différents dispositifs étant tous physiquement séparés et indépendants et au moins les dispositifs esclaves 3, 3', 3" étant pourvus de sources d'énergie autonomes.

Le dispositif maître 2 et les dispositifs esclaves 3, 3', 3" comportent chacun un microcontrôleur 4, 5 et un émetteur-récepteur radio 4', 5', ces derniers fonctionnant, pour le dispositif maître 2 et au moins certains des dispositifs esclaves 3, 3', 3" équipés de manière adéquate, en mode alternat et pouvant être sélectivement commutés, par le microcontrôleur 4, 5 associé, entre les canaux de transfert et de service et être amenés à changer sélectivement de mode de fonctionnement, entre un mode écoute ou réception Rx et un mode émission Tx pour chacun des deux canaux, au moins les dispositifs esclaves 3, 3', 3" étant pourvus de sources d'énergie 5" autonomes.

Ce système 1 est caractérisé en ce qu'il met en oeuvre le procédé de communication bidirectionnelle radiofréquence tel que décrit précédemment.

Il convient de noter que les valeurs numériques indiquées sur les figures 4 à 6 ne le sont qu'à titre d'exemples.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de communication bidirectionnelle radiofréquence entre un dispositif central maître (2), tel qu'une centrale d'alarme par exemple ou analogue, et plusieurs dispositifs périphériques esclaves (3, 3', 3"), tels que des capteurs ou des détecteurs, qui sont associés à des caméras et/ou à des micros, des haut-parleurs, des actionneurs, des organes de commande ou de signalisation, ces dispositifs (2, 3, 3', 3") étant tous physiquement séparés et indépendants, mais faisant tous partie d'un même système (1), tel qu'un système d'alarme ou de surveillance par exemple,
ce procédé utilisant un canal de service correspondant à une ou plusieurs bande(s) de fréquence avec une disponibilité temporelle faible et un canal de transfert correspondant à une ou plusieurs autre(s) bande(s) de fréquence avec une disponibilité temporelle limitée mais plus grande que pour le canal de service, le canal de service étant normalement dévolu à l'échange de messages de commande ou de signalement et le canal de service étant normalement dévolu à l'échange de paquets de données, essentiellement des dispositifs esclaves (3, 3', 3") adaptés vers le dispositif maître (2), du type images vidéo, et éventuellement du type signaux audio,
ce procédé mettant en oeuvre, de manière combinée sur les deux canaux précités, un duplexage par répartition dans le temps (TDD) avec une trame temporelle répétitive directrice qui est constituée de fenêtres temporelles (F) identiques successives prédéfinies en termes de calage temporel, de durée et de structuration, et qui comprend, d'une part, des premiers créneaux temporels (TPC), de durée prédéterminée, réservés prioritairement pour une éventuelle communication descendante du dispositif maître (2) vers un ou plusieurs dispositifs esclaves (3, 3', 3"), d'autre part, des seconds créneaux temporels (TPP), de durée prédéterminée, réservés prioritairement pour une éventuelle communication montante d'un des dispositifs esclaves (3, 3', 3") vers le dispositif maître (2) et, enfin, des intervalles temporels intermédiaires non affectés (ExtTPC) s'étendant chacun de la fin d'un premier créneau (TPC) au début d'un second créneau (TPP) consécutif, lesdits créneaux (TPC et TPP) présentant des durées prédéterminées et étant arrangés temporellement de manière répétitivement alternée, avec les intervalles temporels intermédiaires (ExtTPC), dans les fenêtres temporelles (F) successives, dont chacune comprend un premier créneau (TPC), un second créneau (TPP) et un intervalle intermédiaire (ExtTPC),
le dispositif maître (2) et les dispositifs esclaves (3, 3', 3") comportant chacun un microcontrôleur (4, 5) et un émetteur-récepteur radio (4', 5'), ces derniers fonctionnant, pour le dispositif maître (2) et au moins certains des dispositifs esclaves (3, 3', 3") équipés de manière adéquate, en mode alternat et pouvant être sélectivement commutés, par le microcontrôleur (4, 5) associé, entre les canaux de transfert et de service et être amenés à changer sélectivement de mode de fonctionnement, entre un mode écoute ou réception (Rx) et un mode émission (Tx) pour chacun des deux canaux, au moins les dispositifs esclaves (3, 3', 3") étant pourvus de sources d'énergie (5") autonomes,
procédé **caractérisé :**
**en ce que** la trame temporelle directrice est mise en place sur le canal de service,
**en ce que** le basculement sélectif des différents dispositifs (2, 3, 3', 3") du système (1) entre les deux canaux est commandé par le dispositif maître (2), et en ce que la gestion du basculement consiste à réaliser, d'une part, un basculement automatique vers le canal de service avant l'occurrence de chaque second créneau (TPP) ou de chaque premier créneau (TPC) avec une phase d'activité prévue et, d'autre part, un basculement vers le canal de transfert à la fin d'une phase d'activité sur le canal de service durant un créneau (TPC, TPP) considéré ou d'une absence d'activité sur le canal de service pendant une durée prédéterminée à partir du début d'un créneau (TPP, TPC), le dispositif maître (2) basculant entre les deux canaux durant chaque fenêtre temporelle (F) et seul le dispositif esclave (3, 3', 3") concerné par une transmission montante à venir vers le dispositif maître (2) étant basculé sur le canal de transfert et demeurant sur ce dernier jusqu'à la fin de la transmission considérée,
et **en ce que** le dispositif maître (2) détermine, en l'absence d'activité sur le canal de service ou à la fin d'une phase d'activité en communication montante ou descendante sur le canal de service, durant un premier ou un second créneau (TPC, TPP), une durée de disponibilité (DD) à venir du canal de transfert soit jusqu'au prochain premier créneau (TPC) avec une phase d'activité, soit jusqu'au second créneau (TPP) de la prochaine fenêtre (F), ce en fonction du type de créneau (TPC ou TPP) dans lequel débute ladite durée (DD), cette information de durée (DD) étant à chaque nouvelle détermination transmise au dispositif esclave (3, 3', 3") concerné par une transmission montante à venir ou en cours sur le canal de transfert.

2. Procédé selon la revendication 1, **caractérisé en ce que** la valeur d'une durée de disponibilité (DD) calculée par le dispositif maître (2) correspond à chaque fois à la durée temporelle s'écoulant entre le prochain basculement du système (1) sur le canal de transfert et le prochain rebasculement consécutif dudit système (1) sur le canal de service et **en ce que** cette valeur de durée de disponibilité représente soit une durée restante d'un premier créneau (TPC) additionnée de la durée de l'intervalle temporel intermédiaire (ExtTPC) consécutif de la même fenêtre (F), soit une durée restante d'un second créneau (TPP), ou encore la somme de la durée restante d'un second créneau (TPP), de la durée du premier créneau (TPC) consécutif de la fenêtre (F) suivante et de la durée de l'intervalle temporel intermédiaire (ExtTPC) suivant de cette même fenêtre (F), ce en fonction de l'occurrence ou non de transmission(s) durant les premier et second créneaux (TPC, TPP) concernés.

3. Procédé selon l'une quelconque des revendications 1 et 2, **caractérisé en ce que**, en-dehors des premiers créneaux temporels (TPC), chacun des dispositifs esclaves (3, 3', 3") équipé d'un émetteur-récepteur (5') multicanaux est en permanence et par défaut en mode écoute ou réception (Rx) sur le canal de transfert, à l'exception du dispositif esclave (3, 3', 3") éventuellement actif en mode émission.

4. Procédé selon l'une quelconque des revendications 1 à 3, **caractérisé en ce que** la durée de disponibilité (DD) du canal de transfert est transmis par le dispositif maître (2) au dispositif esclave (3, 3', 3") concerné par une prochaine transmission montante sur le canal de transfert, après basculement dudit dispositif esclave sur ce canal, la valeur de durée (DD) communiquée étant à chaque fois ajustée de la durée de transmission du message contenant ladite valeur et, le cas échéant, de la durée du changement de mode de fonctionnement des émetteurs-récepteurs radio (4', 5') des différents dispositifs (2, 3, 3', 3"), le dispositif maître (2) basculant automatiquement en mode écoute ou réception (Rx) sur ledit canal de transfert après transmission de ladite durée (DD).

5. Procédé selon l'une quelconque des revendications 1 à 4, **caractérisé en ce qu'**il consiste, par l'intermédiaire d'un moyen de comptage/décomptage associé à chaque dispositif (2, 3, 3', 3") du système (1), avantageusement intégré au microcontrôleur (4, 5) concerné, à comptabiliser de manière continue la durée restante d'autorisation d'émission pour chaque dispositif (2, 3, 3', 3"), au moins pour le canal de transfert, en appliquant une méthode de détermination glissante dans le temps, les valeurs desdites durées restantes étant centralisées et gérées au niveau du dispositif maître (2) avec un rafraîchissement périodique et une diffusion aux dispositifs esclaves (3, 3', 3").

6. Procédé selon l'une quelconque des revendications 1 à 5, **caractérisé en ce que** la transmission des données vidéo sur le canal de transfert est une transmission par paquets successifs et de même longueur chacun, sans acquittement intermédiaire, le dernier paquet d'une fenêtre temporelle (F) devant être réceptionné par le dispositif (2, 3, 3', 3") concerné avant le début du second créneau (TPP) de cette fenêtre, **en ce que** chaque paquet comporte un entête comprenant notamment un préambule de calage, une séquence de synchronisation et des paramètres d'identification du dispositif destinataire, et **en ce que** le procédé consiste à utiliser, pour chaque paquet à transmettre, un premier type de modulation et une première vitesse de transmission pour l'entête et un second type de modulation plus complexe et une seconde vitesse de transmission plus élevée pour la zone de données de chaque paquet, par exemple avec une modulation GFSK de 56 kbauds pour l'entête et une modulation 4GFSK de 56 kbauds pour la zone de données, l'encodage des données étant avantageusement du type H 264 ou MPEG-4 AVC.

7. Procédé selon l'une quelconque des revendications 1 à 6, **caractérisé en ce qu'**il consiste à mettre en oeuvre, notamment lors d'une transmission en temps réel ou quasi temps réel sur le canal de transfert, après encodage et structuration des données vidéo en blocs et desdits blocs en paquets, un mécanisme de détection-correction d'erreurs de type Reed-Solomon associé à un mécanisme d'entrelacement/désentrelacement pour le conditionnement desdites données avant leur transmission par paquets et leur déconditionnement après réception.

8. Procédé selon la revendication 7, **caractérisé en ce qu'**il consiste, au niveau du dispositif (2, 3, 3', 3") émetteur et après division des données vidéo à transmettre en blocs puis en paquets, à calculer les codes correcteurs (RS) pour chaque bloc et à les intercaler, dans un flux linéaire, entre le bloc concerné par un code (RS) donné et le bloc suivant, à enregistrer ces blocs et leurs codes associés respectifs de manière séquentielle dans une mémoire tampon à structure matricielle à deux dimensions et à effectuer une lecture de cette mémoire tampon, en vue de leur regroupement et transmission en paquets, avec un balayage orienté transversalement par rapport à celui appliqué pour l'enregistrement, le ou les dispositifs (2, 3, 3', 3") récepteur(s) effectuant les opérations inverses pour récupérer les données des blocs des paquets réceptionnés et de leurs codes associés, avant d'appliquer la correction d'erreurs.

9. Procédé selon la revendication 8, **caractérisé en ce que** les matrices de la mémoire tampon présentent toutes une taille de 38 octets et **en ce que** chaque paquet est constitué de plusieurs, par exemple quatre blocs de données vidéo encodées de 223 octets et leurs codes (RS) associés de 32 octets chacun, la taille de chaque bloc étant ajusté à 256 octets.

10. Procédé selon l'une quelconque des revendications 1 à 9, **caractérisé en ce que** la transmission de données vidéo sur le canal de transfert d'un dispositif esclave (3, 3', 3") adapté vers le dispositif maître (2) est réalisée, de manière programmée, suite à une requête préalable, unique ou répétée, adressée par ledit dispositif maître (2) aux dispositifs esclaves (3, 3', 3") concernés ou, de manière spontanée, à l'initiative du dispositif esclave (3, 3', 3") concerné, suite à l'occurrence d'un évènement affectant ledit dispositif esclave, la transmission spontanée étant prioritaire et la transmission programmée n'étant démarrée ou poursuivie que si le dispositif esclave (3, 3', 3") sollicité par la requête dispose d'une durée restante d'autorisation d'émission supérieure à une valeur limite inférieure.

11. Procédé selon l'une quelconque des revendications 1 à 10, **caractérisé en ce qu'**il consiste, pour au moins certains dispositifs esclaves (3, 3', 3"), à comptabiliser la durée totale d'émission au moyen d'un compteur correspondant et à transmettre soit à intervalles réguliers un message informatif, soit, le cas échéant, un message d'alerte au dispositif maître (2).

12. Procédé selon l'une quelconque des revendications 1 à 11, **caractérisé en ce qu'**il consiste, pour la transmission bidirectionnelle de signaux audio entre le dispositif maître (2) et les dispositifs esclaves (3, 3', 3"), à réaliser une transmission isochrone quasi temps réel par paquets, en mode semi-duplex ou en mode duplex intégral, chaque paquet de données audio étant constitué par acquisition, codage et/ou compression et accumulation d'un certain nombre d'échantillons sonores collectés au niveau d'un dispositif esclave (3, 3', 3") ou non, faisant partie du système (1) ou non et équipé de moyens d'acquisition adéquats.

13. Procédé selon la revendication 12, **caractérisé en ce que** les paquets de données audio présentent une taille nettement inférieure, par exemple moitié ou un quart, à celle des paquets de données vidéo et **en ce que** l'espacement temporel entre paquets de données audio successifs est nettement supérieur à la durée de transmission d'un tel paquet, un message de durée de disponibilité étant adressé par le dispositif maître (2) au dispositif esclave (3, 3', 3") concerné avant la transmission d'un premier paquet de données audio d'une transmission et/ou chaque paquet de données audio comportant dans son entête un indicateur de poursuite ou d'arrêt de la transmission en cours.

14. Système d'alarme comprenant une centrale faisant office de dispositif maître (2) et au moins plusieurs capteurs, détecteurs ou périphériques analogues faisant office de dispositifs esclaves (3, 3', 3") et dont au moins certains sont associés à des caméras, ces différents dispositifs étant tous physiquement séparés et indépendants et au moins les dispositifs esclaves (3, 3', 3") étant pourvus de sources d'énergie autonomes,
le dispositif maître (2) et les dispositifs esclaves (3, 3', 3") comportant chacun un microcontrôleur (4, 5) et un émetteur-récepteur radio (4', 5'), ces derniers fonctionnant, pour le dispositif maître (2) et au moins certains des dispositifs esclaves (3, 3', 3") équipés de manière adéquate, en mode alternat et pouvant être sélectivement commutés, par le microcontrôleur (4, 5) associé, entre les canaux de transfert et de service et être amenés à changer sélectivement de mode de fonctionnement, entre un mode écoute ou réception (Rx) et un mode émission (Tx) pour chacun des deux canaux, au moins les dispositifs esclaves (3, 3', 3") étant pourvus de sources d'énergie (5") autonomes,
système (1) **caractérisé en ce qu'**il met en oeuvre le procédé de communication bidirectionnelle radiofréquence selon l'une quelconque des revendications 1 à 13.

## Patentansprüche

1. Verfahren zur bidirektionalen Funkkommunikation zwischen einer zentralen Master-Vorrichtung (2), wie etwa einer Alarmzentrale oder dergleichen, und mehreren peripheren Sklaven-Vorrichtungen (3, 3', 3"), wie etwa Sensoren oder Detektoren, die mit Kameras und/oder Mikrophonen, Lautsprechern, Aktoren, Steuer- oder Anzeigeorganen verbunden sind, wobei alle diese Vorrichtungen (2, 3, 3', 3") physisch getrennt und unabhängig sind, aber alle Teil eines und desselben Systems (1) sind, wie z.B. eines Alarm- oder Überwachungssystems,
wobei dieses Verfahren einen Dienstkanal mit niedriger zeitlicher Verfügbarkeit verwendet, der einem oder mehreren Frequenzbändern entspricht, und einen Übertragungskanal mit begrenzter zeitlicher Verfügbarkeit, die jedoch größer ist, als die des Dienstkanals, der einem oder mehreren anderen Frequenzbändern entspricht, wobei der Dienstkanal normalerweise dem Austausch von Steuer- oder Signalmeldungen gewidmet ist und der Dienstkanal normalerweise dem Austausch von Datenpaketen der Art von Videobildern und eventuell der Art von Audiosignalen im Wesentlichen der dafür eingerichteten Sklaven-Vorrichtungen (3, 3', 3") zu der Master-Vorrichtung (2) gewidmet ist,
wobei dieses Verfahren kombiniert auf den beiden genannten Kanälen ein Zeitduplexverfahren (TDD) mit einem repetitiven Leitzeitrahmen anwendet, der aus identischen, aufeinanderfolgenden, in Bezug auf ihre zeitliche Stellung, ihre Dauer und ihre Struktur vordefinierten Zeitfenstern (F) besteht und einerseits erste Zeitschlitze (TPC) vorbestimmter Dauer umfasst, die prioritär für eine eventuelle absteigende Kommunikation, von der Master-Vorrichtung (2) zu einer oder mehreren Sklaven-Vorrichtungen (3, 3', 3"), reserviert sind, und andererseits zweite Zeitschlitze (TPP) vorbestimmter Dauer, die prioritär für eine eventuelle aufsteigende Kommunikation, von einer der Sklaven-Vorrichtungen (3, 3', 3") zur Master-Vorrichtung (2), reserviert sind, und schließlich nicht zugeordnete Zwischenzeitintervalle (ExtTPC), die sich jeweils vom Ende eines ersten Schlitzes (TPC) bis zum Beginn eines folgenden zweiten Schlitzes (TPP) erstrecken, wobei die genannten Schlitze (TPC und TPP) vorbestimmte Dauern aufweisen und mit den Zwischenzeitschlitzen (ExtTPC) zeitlich abwechselnd sich wiederholend in den aufeinanderfolgenden Zeitfenstern (F) angeordnet sind, von denen jedes einen ersten Schlitz (TPC), einen zweiten Schlitz (TPP) und ein Zwischenzeitintervall (ExtTPC) umfasst,
wobei die Master-Vorrichtung (2) und die Sklaven-Vorrichtungen (3, 3', 3") jeweils einen Mikrosteuerbaustein (4, 5) und einen Funk-Sender-Empfänger (4', 5') aufweisen, wobei diese letztgenannten in der Master-Vorrichtung und mindestens in bestimmten, in entsprechender Weise ausgerüsteten der Sklaven-Vorrichtungen (3, 3', 3") im Halbduplexbetrieb arbeiten und durch den zugehörigen Mikrosteuerbaustein (4, 5) wahlweise zwischen den Übertragungs- und Dienstkanälen geschaltet und dazu veranlasst werden können, die Funktionsweise zwischen einer Empfangsbetriebsart (Rx) und einer Sendebetriebsart (Tx) auf jedem der beiden Kanäle zu wechseln, wobei mindestens die Sklaven-Vorrichtungen (3, 3', 3") mit netzunabhängigen Energiequellen (5") versehen sind,
Verfahren, **dadurch gekennzeichnet,**
**dass** der Leitzeitrahmen auf dem Dienstkanal eingerichtet ist, dadurch, dass der wahlweise Wechsel der verschiedenen Vorrichtungen (2, 3, 3', 3") des Systems (1) zwischen den beiden Kanälen von der Master-Vorrichtung (2) gesteuert wird und dadurch, dass die Verwaltung des Wechsels darin besteht, einerseits vor dem Eintreten jedes zweiten Schlitzes (TPP) oder jedes ersten Schlitzes (TPC) mit einer vorgesehenen Aktivitätsphase eine automatische Umschaltung auf den Dienstkanal vorzunehmen und andererseits eine Umschaltung auf den Übertragungskanal am Ende einer Aktivitätsphase auf dem Dienstkanal während eines betrachteten Schlitzes (TPC, TPP) oder fehlender Aktivität auf dem Dienstkanal während einer vorbestimmten Dauer ab dem Beginn eines Schlitzes (TPP, TPC), wobei die Master-Vorrichtung (2) während jedes Zeitfensters (F) zwischen den beiden Kanälen umschaltet und nur die von einer kommenden aufsteigenden Übertragung zur Master-Vorrichtung (2) betroffene Sklaven-Vorrichtung (3, 3', 3") auf den Übertragungskanal umgeschaltet wird und auf diesem letztgenannten bis zum Ende der betrachteten Übertragung verweilt,
dadurch, dass die Master-Vorrichtung (2) bei fehlender Aktivität auf einem Dienstkanal oder am Ende einer Aktivitätsphase auf- oder absteigender Kommunikation auf dem Dienstkanal während eines ersten oder eines zweiten Schlitzes (TPC, TPP) eine kommende Verfügbarkeitsdauer (DD) des Übertragungskanals entweder bis zum nächsten ersten Schlitz (TPC) mit Aktivitätsphase, oder bis zum zweiten Schlitz (TPP) des nächsten Fensters (F) bestimmt, und zwar in Abhängigkeit von der Art des Schlitzes (TPC oder TPP), in dem die genannte Dauer (DD) beginnt, wobei diese Dauerinformation (DD) bei jeder neuen Bestimmung der Sklaven-Vorrichtung (3, 3', 3") übermittelt wird, die von einer kommenden oder laufenden aufsteigenden Übertragung auf dem Übertragungskanal betroffen ist.

2. Verfahren nach Patentanspruch 1, **dadurch gekennzeichnet, dass** der von der Master-Vorrichtung (2) berechnete Wert einer Verfügbarkeitsdauer (DD) jeweils der Zeitdauer entspricht, die zwischen dem nächsten Wechsel des Systems (1) auf den Übertragungskanal und dem folgenden Wechsel des genannten Systems (1) auf den Dienstkanal verstreicht, und dadurch, dass dieser Wert der Verfügbarkeitsdauer entweder eine verbleibende Dauer eines ersten Schlitzes (TPC) ist, der die Dauer des folgenden Zwischenzeitintervalls (ExtTPC) desselben Fensters (F) hinzugefügt wurde, oder eine verbleibende Dauer eines zweiten Schlitzes (TPP), oder auch die Summe der verbleibenden Dauer eines zweiten Schlitzes (TPP), der Dauer des folgenden ersten Schlitzes (TPC) des folgenden Fensters (F) und der Dauer des folgenden Zwischenzeitintervalls (ExtTPC) desselben Fensters (F), in Abhängigkeit von Eintreten oder Ausbleiben einer/von Übertragung/en während der betroffenen ersten und zweiten Schlitze (TPC, TPP).

3. Verfahren nach irgendeinem der Patentansprüche 1 und 2, **dadurch gekennzeichnet, dass** jede der mit einem Mehrkanal-Sender-Empfänger (5') ausgestattete Sklaven-Vorrichtung (3, 3', 3") außerhalb der ersten Zeitschlitze (TPC) dauernd und als Standard auf dem Übertragungskanal auf Empfangsbetrieb (Rx) geschaltet ist, mit Ausnahme der eventuell im Sendebetrieb aktiven Sklaven-Vorrichtung (3, 3', 3").

4. Verfahren nach irgendeinem der Patentansprüche 1 bis 3, **dadurch gekennzeichnet, dass** die Verfügbarkeitsdauer (DD) des Übertragungskanals von der Master-Vorrichtung (2) an die von einer nächsten aufsteigenden Übertragung auf dem Übertragungskanal betroffene Sklaven-Vorrichtung (3, 3', 3") gesendet wird, nachdem die genannte Sklaven-Vorrichtung auf diesen Kanal geschaltet wurde, wobei der mitgeteilte Wert der Dauer (DD) jedes Mal um die Übertragungsdauer der Meldung berichtigt wird, die diesen Wert enthält, und gegebenenfalls um die Dauer des Wechsels der Betriebsart der Funk-Sender-Empfänger (4', 5') der verschiedenen Vorrichtungen (2, 3, 3', 3"), wobei die Master-Vorrichtung (2) automatisch nach der Übermittlung der genannten Dauer (DD) auf dem genannten Übertragungskanal auf Empfangsbetrieb wechselt.

5. Verfahren nach irgendeinem der Patentansprüche 1 bis 4, **dadurch gekennzeichnet, dass** es darin besteht, über ein mit jeder Vorrichtung (2, 3, 3', 3") des Systems (1) verbundenes Vorwärts-/ Rückwärtszählmittel, das vorteilhafterweise in den betreffenden Mikrosteuerbaustein (4, 5) integriert ist, laufend die Restdauer der Sendeerlaubnis für jede Vorrichtung (2, 3, 3', 3") abzurechnen, mindestens für den Übertragungskanal, indem ein zeitlich gleitendes Bestimmungsverfahren angewandt wird, wobei die Werte der genannten Restdauern, mit periodischer Auffrischung und Verteilung an die Sklaven-Vorrichtungen (3, 3', 3"), in der Master-Vorrichtung (2) zentralisiert und verarbeitet werden.

6. Verfahren nach irgendeinem der Patentansprüche 1 bis 5, **dadurch gekennzeichnet, dass** die Übertragung der Videodaten auf dem Übertragungskanal eine Übertragung in aufeinanderfolgenden Paketen jeweils gleicher Länge ist, ohne Zwischenquittung, wobei das letzte Paket eines Zeitfensters (F) vor dem Beginn des zweiten Schlitzes (TPP) dieses Fensters von der betroffenen Vorrichtung (2, 3, 3', 3") empfangen worden sein muss, dadurch, dass jedes Paket einen Kopf aufweist, der insbesondere eine Abgleich-Präambel umfasst, eine Synchronisationssequenz und Parameter zur Identifikation der Bestimmungs-Vorrichtung, und dadurch, dass das Verfahren darin besteht, für jedes zu übertragende Paket einen ersten Modulationstyp und eine erste Übertragungsgeschwindigkeit für den Kopf zu verwenden und einen zweiten, komplexeren Modulationstyp und eine höhere zweite Übertragungsgeschwindigkeit für den Datenbereich jedes Paketes, beispielsweise mit einer GFSK-Modulation von 56 kbaud für den Kopf und mit einer 4GFSK-Modulation von 56 kbaud für den Datenbereich, wobei die Codierung der Daten vorteilhafterweise vom Typ H264 oder MPEG-4 AVC ist.

7. Verfahren nach irgendeinem der Patentansprüche 1 bis 6, **dadurch gekennzeichnet, dass** es darin besteht, insbesondere bei einer Realzeit- oder Quasirealzeitübertragung über den Übertragungskanal, nach Codierung und Strukturierung der Videodaten in Blöcke und der genannten Blöcke in Pakete einen Fehlerfeststellungs- und -korrekturmechanismus vom Typ Reed-Solomon in Verbindung mit einem Interlacing-/Deinterlacing-Mechanismus für das Verpacken der genannten Daten vor ihrer Übertragung in Paketen und ihr Entpacken nach Empfang anzuwenden.

8. Verfahren nach Patentanspruch 7, **dadurch gekennzeichnet, dass** es darin besteht, im Bereich der sendenden Vorrichtung (2, 3, 3', 3") und nach der Unterteilung der zu übermittelnden Videodaten in Blöcke und dann Pakete die Korrekturcodes (RS) für jeden Block zu berechnen und sie in einem linearen Fluss zwischen den von einem gegebenen Code (RS) betroffenen Block und den folgenden Block einzufügen, diese Blöcke und ihre jeweiligen zugehörigen Codes sequentiell in einem Pufferspeicher mit zweidimensionaler Matrixstruktur zu speichern und zu ihrer Gruppierung und Übertragung in Paketen einen Zugriff auf diesen Pufferspeicher mit einer Abtastung vorzunehmen, die relativ zu derjenigen, die für die Speicherung angewandt wurde, transversal orientiert ist, wobei die empfangende(n) Vorrichtung(en) (2, 3, 3', 3") die umgekehrten Vorgänge ausführen, um die Daten der Blöcke der empfangenen Pakete und ihre zugehörigen Codes zurückzugewinnen, bevor die Fehlerkorrektur angewandt wird.

9. Verfahren nach Patentanspruch 8, **dadurch gekennzeichnet, dass** alle Matrizen des Pufferspeichers eine Größe von 38 Byte haben und dadurch, dass jedes Paket aus mehreren, beispielsweise vier codierten Videodatenblöcken zu 223 Byte und ihren zugehörigen Codes (RS) zu je 32 Byte besteht, wobei die Größe jedes Blockes auf 256 Byte eingestellt wird.

10. Verfahren nach irgendeinem der Patentansprüche 1 bis 9, **dadurch gekennzeichnet, dass** die Übertragung von Videodaten auf dem Übertragungskanal von einer dafür eingerichteten Sklaven-Vorrichtung (3, 3', 3") zur Master-Vorrichtung (2) programmiert erfolgt, auf eine vorherige einmalige oder wiederholte, von der genannten Master-Vorrichtung (2) an die betreffenden Sklaven-Vorrichtungen (3, 3', 3") geschickte Anforderung hin oder spontan auf Initiative der betreffenden Sklaven-Vorrichtung (3, 3', 3") hin infolge des Eintretens eines die genannte Sklaven-Vorrichtung betreffenden Ereignisses, wobei die spontane Übertragung vorrangig ist und die programmierte Übertragung nur erfolgt oder fortgesetzt wird, wenn die durch die Anforderung aufgeforderte Sklaven-Vorrichtung (3, 3', 3") über eine Restdauer der Sendeerlaubnis verfügt, die einen unteren Schwellenwert überschreitet.

11. Verfahren nach irgendeinem der Patentansprüche 1 bis 10, **dadurch gekennzeichnet, dass** es mindestens für bestimmte Sklaven-Vorrichtungen (3, 3', 3") darin besteht, die gesamte Sendedauer mit Hilfe eines entsprechenden Zählers abzurechnen und entweder in regelmäßigen Abständen eine Informationsmeldung oder gegebenenfalls eine Warnmeldung an die Master-Vorrichtung (2) zu senden.

12. Verfahren nach irgendeinem der Patentansprüche 1 bis 11, **dadurch gekennzeichnet, dass** es für die bidirektionale Übertragung von Audiosignalen zwischen der Master-Vorrichtung (2) und den Sklaven-Vorrichtungen (3, 3', 3") darin besteht, eine isochrone Quasirealzeitübertragung in Paketen in Halbduplex- oder Vollduplexbetrieb vorzunehmen, wobei jedes Audiodatenpaket durch Erfassung, Codierung und/oder Kompression und Ansammlung einer bestimmten Zahl von Schallabtastwerten, die an einer Sklaven-Vorrichtung (3, 3', 3") erfasst wurden oder nicht, die zum System (1) gehört oder nicht und mit angemessenen Erfassungsmitteln ausgestattet ist, erstellt wird.

13. Verfahren nach Patentanspruch 12, **dadurch gekennzeichnet, dass** die Audiodatenpakete eine erhebliche geringere Größe, beispielsweise die Hälfte oder ein Viertel, als die Videodatenpakete aufweisen und dadurch, dass der zeitliche Abstand zwischen aufeinanderfolgenden Audiodatenpaketen erheblich größer ist, als die Übertragungsdauer eines solchen Paketes, wobei vor Übertragung eines ersten Audiodatenpaketes einer Übertragung eine Meldung über die Verfügbarkeitsdauer von der Mastervorrichtung (2) an die betreffende Sklaven-Vorrichtung (3, 3', 3") gesendet wird und/oder jedes Audiodatenpaket in seinem Kopf eine Angabe über Fortsetzung oder Unterbrechung der laufenden Übertragung enthält.

14. Alarmsystem, eine Zentrale umfassend, die als Master-Vorrichtung (2) dient, und mindestens mehrere Sensoren, Detektoren oder ähnliche Peripheriegeräte, die als Sklaven-Vorrichtungen (3, 3', 3") dienen und von denen mindestens bestimmte mit Kameras verbunden sind, wobei alle diese verschiedenen Vorrichtungen physisch voneinander getrennt und unabhängig sind und wobei mindestens die Sklaven-Vorrichtungen (3, 3', 3") mit netzunabhängigen Energiequellen versehen sind,
wobei die Master-Vorrichtung (2) und die Sklaven-Vorrichtungen (3, 3', 3") jeweils einen Mikrosteuerbaustein (4, 5) und einen Funk-Sender-Empfänger (4', 5') aufweisen, wobei diese letztgenannten in der Master-Vorrichtung (2) und mindestens in bestimmten, in entsprechender Weise ausgerüsteten der Sklaven-Vorrichtungen (3, 3', 3") im Halbduplexbetrieb arbeiten und durch den zugehörigen Mikrosteuerbaustein (4, 5) wahlweise zwischen Übertragungs- und Dienstkanal geschaltet und dazu veranlasst werden können, die Funktionsweise zwischen einer Empfangsbetriebsart (Rx) und einer Sendebetriebsart (Tx) auf jedem der beiden Kanäle zu wechseln, wobei mindestens die Sklaven-Vorrichtungen (3, 3', 3") mit netzunabhängigen Energiequellen (5") versehen sind,
System (1), **dadurch gekennzeichnet, dass** es das Verfahren zur bidirektionalen Funkkommunikation nach irgendeinem der Patentansprüche 1 bis 13 anwendet.

## Claims

1. Bidirectional radio communication method between a central master device (2), such as an alarm system for example or the like, and a plurality of peripheral slave devices (3, 3', 3"), such as sensors or detectors, which are connected to cameras and/or microphones, speakers, actuators, control or signalling devices, said devices (2, 3, 3', 3") all being physically separated and independent, but all forming part of the same system (1), such as an alarm or surveillance system for example,
said method using a service channel corresponding to one or more frequency range(s) with low time availability and a transfer channel corresponding to one or more other frequency range(s) with a limited time availability but one that is greater than for the service channel, the service channel being normally devoted to the exchange of control or signalling messages and the service channel being normally devoted to the exchange of data packages, essentially slave devices (3, 3', 3"), adapted to the master device (2), of the type for video images and possibly of the type for audio signals,
said method implementing, in a combined manner on the two aforementioned channels, a time division duplex (TDD) with a repetitive time frame which is formed by identical successive time windows (F) which are predefined in terms of time setting, duration and structuring, and which comprises, on the one hand, first time slots (TPC), of predetermined duration, reserved firstly for a possible downward communication of the master device (2) to one or more slave devices (3, 3', 3") and, on the other hand, second time slots (TPP), of predetermined duration, reserved firstly for a possible upward communication of one of the slave devices (3, 3', 3") to the master device (2) and, lastly, unaffected intermediate time intervals (ExtTPC) each extending from the end of a first slot (TPC) to the beginning of a second consecutive slot (TPP), said slots (TPC and TPP) representing predetermined periods and being arranged temporally in an alternative repetitive manner, with intermediate time intervals (ExtTPC), in successive time windows (F), each of which comprises a first slot (TPC), a second slot (TPP) and an intermediate interval (ExtTPC),
the master device (2) and the slave devices (3, 3', 3") each comprising a microcontroller (4, 5) and a radio transceiver (4', 5'), the latter functioning, for the master device (2) and at least some of the slave devices (3, 3', 3") equipped in an adequate manner, in duplex mode and able to be switched selectively, by the associated microcontroller (4, 5), between the transfer and service channels and to be made to selectively change the mode of functioning between a listening or receiving mode (Rx) and an emission mode (Tx) for each of the two channels, at least the slave devices (3, 3', 3") being provided with independent power sources (5"),
the method being **characterised in that**:
the director time frame is applied to the service channel,
**in that** the selective switchover of the different devices (2, 3, 3', 3") of the system (1) between the two channels is controlled by the master device (2), and **in that** the management of the switchover consists, on the one hand, of performing an automatic switching to the service channel prior to the appearance of each second slot (TPP) or
each first slot (TPC) with an intended activity phase and, on the other hand, a switchover to the transfer channel at the end of an activity phase on the service channel during a particular slot (TPC, TPP) or an absence of activity on the service channel during a predetermined period from the beginning of a slot (TPP, TPC), the master device (2) switching between the two channels during each time window (F) and only the slave device (3, 3', 3") concerned by an upward transmission to the master device (2) being switched to the transfer channel and remaining on the latter until the end of the particular transmission,
and **in that** the master device (2) determines, in the absence of activity on the service channel or at the end of a phase of activity in upward or downward communication on the service channel, during a first or a second slot (TPC, TPP), a period of availability (DD) from the transfer channel either up to the next premier slot (TPC) with a phase of activity, or up to a second slot (TPP) of the next window (F), as a function of the type of slot (TPC or TPP) in which said period (DD) begins, said period information (DD) being at each new determination transmitted to the particular slave device (3, 3', 3") by an upcoming or current upward transmission to the transfer channel.

2. Method according to claim 1, **characterised in that** the value of a period of availability (DD) calculated by the master device (2) corresponds each time to the time period flowing between the next switchover of the system (1) to the transfer channel and the next consecutive reswitching of the said system (1) to the service channel and **in that** this value of the period of availability represents either a remaining period of a first slot (TPC) added to the period of the intermediate consecutive time interval (ExtTPC) of the same window (F), or a remaining period of a second slot (TPP), or even the sum of the remaining period of a second slot (TPP), of the period of the first consecutive slot (TPC) of the following window (F) and the period of the intermediate time interval (ExtTPC) following this same window (F), as a function of the occurrence or not of transmission(s) during the first and second particular slots (TPC, TPP).

3. Method according to any of claims 1 and 2, **characterised in that** outside of the first time slots (TPC), each of the slave devices (3, 3', 3") equipped with a multichannel transceiver (5') is permanently and by default in listen-only or receiving mode (Rx) on the transfer channel, with the exception of the slave device (3, 3', 3") possibly active in transmission mode.

4. Method according to any of claims 1 to 3, **characterised in that** the period of availability (DD) of the transfer channel is transmitted by the master device (2) to the particular slave device (3, 3', 3") by a next upward transmission to the transfer channel, after the switching of said slave device to this channel, the value of the period (DD) communicated being adjusted each time to the period of transmission of the message containing said value and, if necessary, of the period of function mode change of the radio transceivers (4', 5') of different devices (2, 3, 3', 3"), the master device (2) switching automatically into listen-only or receiving mode (Rx) to said transfer channel after the transmission of said period (DD).

5. Method according to any of claims 1 to 4, **characterised in that** it consists, by means of a counting/counting down device associated with each device (2, 3, 3', 3") of the system (1), which is integrated advantageously into the particular microcontroller (4, 5), of recording continuously the remaining emission authorisation period for each device (2, 3, 3', 3"), at least for the transfer channel, by applying a method for determining shifting over time, the values of said remaining periods being centralised and managed by the master device (2) with periodic refreshment and diffusion to the slave devices (3, 3', 3").

6. Method according to any of claims 1 to 5, **characterised in that** the transmission of video data to the transfer channel is transmission by successive packages each of the same length, without intermediate acknowledgement, the last package of a time window (F) having to be received by the particular device (2, 3, 3', 3") before the start of the second slot (TPP) of said window, **in that** each package comprises a header comprising in particular a setting preamble, a synchronisation sequence and parameters for identifying the recipient device, and **in that** the method consists of using, for each package to be transmitted, a first type of modulation and a first transmission speed for the header and a second more complex type of modulation and a second higher transmission speed for the data zone of each package, for example with a GFSK modulation of 56 kbauds for the header and a 4GFSK modulation of 56 kbauds for the data zone, the encoding of the data being advantageously of the type H 264 or MPEG-4 AVC.

7. Method according to any of claims 1 to 6, **characterised in that** it consists of implementing, particularly during a transmission in real time or almost real time to the transfer channel, after the encoding and structuring of video data in blocks and said blocks in packages, a detection- error correction mechanism of the Reed-Solomon type associated with an interlacing/deinterlacing mechanism for packaging said data prior to their transmission in packages and their unpackaging after receiving.

8. Method according to claim 7, **characterised in that** it consists, at the transmitter device (2, 3, 3', 3") and after dividing the video data to be transmitted into blocks and then into packages, of calculating correction codes (RS) for each block and inserting them in a linear flux between the block concerned via a given code (RS) and the following block, of recording said blocks and their respective associated codes in a sequential manner in a buffer memory with a matrix structure in two dimensions and reading from said buffer memory, with a view to regrouping them and transmitting in packages, with scanning oriented transversely relative to the scanning applied to the recording, the receiving device(s) (2, 3, 3', 3") causing inverse operation for recovering the data of the blocks of received packages and their associated codes, before applying the correction of errors.

9. Method according to claim 8, **characterised in that** the matrices of the buffer memory all have a size of 38 octets and **in that** each package is formed by a plurality of, for example four, blocks of encoded video data of 223 octets and their associated codes (RS) each of 32 octets, the size of each block being adjusted to 256 octets.

10. Method according to any of claims 1 to 9, **characterised in that** the transmission of video data to the transfer channel from a slave device (3, 3', 3") adapted to the master device (2) is performed, in a programmed manner, following a previous single or repeated request, addressed by said master device (2) to the particular slave devices (3, 3', 3") or, in a spontaneous manner, at the initiative of the particular slave device (3, 3', 3") following the occurrence of an event affecting said slave device, the spontaneous transmission being high-priority and the programmed transmission only being started or pursued if the slave device (3, 3', 3") affected by the request has a remaining emission authorisation period greater than a lower limit value.

11. Method according to any of claims 1 to 10, **characterised in that** it consists, for at least some slave devices (3, 3', 3"), of recording the total period of emission by means of a corresponding counter and either transmitting an information message at regular intervals or, if necessary an alert message to the master device (2).

12. Method according to any of claims 1 to 11, **characterised in that** it consists for the bidirectional transmission of audio signals between the master device (2) and the slave devices (3, 3', 3"), of forming an almost real time isochronic transmission in packages, in semi-duplex mode or integral duplex mode, each audio data package being formed by acquisition, coding and/or compression and accumulation of a certain number of collected audio samples on a slave device (3, 3', 3") or not, forming part of the system (1) or not and equipped with adequate acquisition means.

13. Method according to claim 12, **characterised in that** the audio data packages have a substantially smaller size, for example a half or a quarter, than the video data packages and **in that** the time spacing between successive audio data packages is much greater than the period of transmission of such a package, a message of the period of availability being addressed by the master device (2) to the particular slave device (3, 3', 3") before the transmission of a first audio data package of a transmission and/or each audio data package comprising in its header an indicator to continue or stop the transmission in progress.

14. Alarm system comprising a station performing the function of a master device (2) and at least several sensors, detectors or similar peripheral devices acting as slave devices (3, 3', 3") and at least some of which are connected to cameras, said different devices all being physically separated and independent and at least the slave devices (3, 3', 3") being provided with autonomous power sources,
the master device (2) and the slave devices (3, 3', 3") each comprising a microcontroller (4, 5) and a radio transceiver (4', 5'), the latter functioning, for the master device (2) and at least some of the slave devices (3, 3', 3") equipped in an adequate manner, in duplex mode and able to be switched selectively by the associated microcontroller (4, 5) between the transfer and service channels and to be made to selectively change the mode of functioning between a listen-only or receiving mode (Rx) and a transmission mode (Tx) for each of the two channels, at least the slave devices (3, 3', 3") being provided with independent power sources (5"),
the system being **characterised in that** it implements the method of bidirectional radio communication according to any of claims 1 to 13.
